# EUROPEAN PATENT APPLICATION

(11) **EP 4 810 656 A1**
(43) Date of publication of application: **23.09.2026**
(21) Application number: 23958902.1
(22) Date of filing: 17.11.2023
(51) Int. Cl.: C23F 11/00

(54) **ANTIRUST COMPOSITION AND AUTOMOBILE COMPONENT**

(71) Applicant: Nihon Parkerizing Co., Ltd., Tokyo 103-0027 (JP)
(72) Inventor: UEHARA, Yoshihiro, Tokyo 103-0027 (JP); MIMATA, Yoshisuke, Tokyo 103-0027 (JP); SUDO, Takahisa, Toyota-shi, Aichi 471-8571 (JP); NAKAMURA, Masahiro, Toyota-shi, Aichi 471-8571 (JP)
(74) Representative: Watermeyer, Nicholas
(86) International application number: PCT/JP2023/041409
(87) International publication number: WO 2025/104900

(57) **Abstract**

An object of the present invention is to provide a rust-preventive composition which has a sufficient corrosion resistance, exhibits an excellent rate of decrease in viscosity with increase in temperature, and is less prone to sagging as the temperature rises when formed into a coating. The above object is resolved by a rust-preventive composition comprising: a rust-preventive additive; bentonite; a filler; a hardened oil; and a diluent; wherein the content of wax is within the range of from 0% by mass to 1% by mass, the content of the rust-preventive additive is within the range of from 16% by mass to 35% by mass, and the content of the bentonite is within the range of from 2% by mass to 6% by mass; and wherein the rust-preventive composition has a rate of decrease in viscosity at a temperature of from 20°C to 80°C of 25% or less.

## Description

### TECHNICAL FIELD

The present invention relates to a rust-preventive composition. The present invention also relates to an automobile component including a rust-preventive coating composed of the rust-preventive composition.

### BACKGROUND ART

Wax-type rust-preventive agents, which are rust-preventive compositions prepared by dissolving or dispersing a wax and any of various additives in a diluent such as an organic solvent, have been used as rust-preventive agents used for the purpose of improving the rust-preventive performance of hollow structures, such as portions under body floor, doors, and bonnets of automobiles.

For example, PTL 1 discloses a rust-preventive composition containing a rust-preventive additive, a wax, a hardened oil and a diluent, further containing from 2 to 6% by mass of bentonite with respect to the total amount of the composition.

### CITATION LIST

### PATENT LITERATURE

[PTL 1] Publication of granted patent application No. 6133660 B

### SUMMARY OF THE INVENTION

### TECHNICAL PROBLEM

Coatings containing rust-preventive agents, which are used for automotive bodies and the like, are exposed to heat such as exhaust heat from automobiles during driving and heat from reflected sunlight during summer. Therefore, such coatings are required to have a coating retention so that sagging does not occur even when heat is applied thereto.

The rust-preventive composition disclosed in PTL 1 has characteristics that the composition is capable of retaining a constant film thickness even when heat is applied thereto after being coated, but in return, has a large film thickness when coated. This leads to the occurrence of sagging by an amount corresponding to the difference in film thickness retention between that during coating and that during heating, leaving room for improvement.

An object of the present invention is to provide a rust-preventive composition which has a sufficient corrosion resistance, exhibits an excellent rate of decrease in viscosity with increase in temperature, and is less prone to sagging as the temperature rises when formed into a coating.

### SOLUTION TO PROBLEM

As a result of intensive studies to achieve the object described above, the present inventors have found that a rust-preventive composition which does not substantially contain a wax, and which has a rate of decrease in viscosity at a temperature of from 20°C to 80°C of 25% or less, can achieve the object, thereby completing the present invention.

The present invention can include the following.
[1] A rust-preventive composition containing: a rust-preventive additive; bentonite; a filler; a hardened oil; and a diluent;
   wherein the content of wax is within the range of 0% by mass or more and 1% by mass or less, the content of the rust-preventive additive is within the range of 16% by mass or more and 35% by mass or less, and the content of the bentonite is within the range of 2% by mass or more and 6% by mass or less; and
   wherein the rust-preventive composition has a rate of decrease in viscosity at a temperature of from 20°C to 80°C of 25% or less.
[2] The rust-preventive composition according to [1], having a viscosity as measured at 80°C of 10,000 mPa·s or more.
[3] The rust-preventive composition according to [1] or [2], wherein the content of the filler is within the range of 5% by mass or more and 15% by mass or less.
[4] The rust-preventive composition according to any one of [1] to [3], wherein the diluent has a kinematic viscosity as measured at 40°C within the range of 50 mm²/s or more and 100 mm²/s or less.
[5] An automobile component including a coating containing the rust-preventive composition according to any one of [1] to [4].

### ADVANTAGEOUS EFFECTS OF INVENTION [0010]

The present invention can provide a rust-preventive composition which has a sufficient corrosion resistance, exhibits excellent rate of decrease in viscosity with an increase in temperature, and is less prone to sagging as the temperature rises when formed into a coating. The present invention can also provide an automobile component including a rust-preventive coating composed of the rust-preventive composition.

### DESCRIPTION OF EMBODIMENTS

The rust-preventive composition according to one embodiment of the present invention contains a rust-preventive additive (A), bentonite (B), a filler (C), a hardened oil (D), and a diluent (E).

### <Rust-Preventive Additive (A)>

The rust-preventive additive can be any additive as long as it is capable of imparting a rust-preventive function to the rust-preventive composition. Examples of the rust-preventive additive which can be employed include sulfonates (such as alkyl benzene sulfonates, for example, calcium salts), carboxylates (such as amine carboxylates), amine salts, fatty acid esters, oxidized paraffin salts, oxidized wax salts, mixtures of sulfonates and oils, mixtures of fatty acid esters and oils, and mixtures of oxidized paraffin salts and oils. A commercially available product of the rust-preventive additive may also be used as it is. The rust-preventive additives can be used singly, or as a mixture of two or more kinds thereof.

The content of the rust-preventive additive is preferably within the range of 16% by mass or more and 35% by mass or less, and more preferably within the range of 18% by mass or more and 30% by mass or less, with respect to the total amount of the rust-preventive composition.

### <Bentonite (B)>

Bentonite is a mineral containing, as a major component, montmorillonite having a layer structure in which plate-like crystals composed of aluminosilicate are layered one on another. The bentonite preferably has a particle size within the range of 0.1 µm or more and 10 µm or less, and more preferably within the range of 1 µm or more and 5 µm or less.

The particle size of the bentonite is a primary particle size. The particle size of the bentonite is defined as the mean value, obtained by arbitrarily extracting 20 samples, measuring the particle sizes (longer diameters) of the extracted samples using an electron microscope, and calculating the average of the measured particle sizes.

The content of the bentonite is preferably within the range of 2% by mass or more and 6% by mass or less, and more preferably within the range of 3% by mass or more and 6% by mass or less, with respect to the total amount of the rust-preventive composition.

### <Filler (C)>

Examples of the filler include calcium carbonate, kaolin clay, talc, mica, and various other extender pigments that are conventionally known. The particle size of the filler is not particularly limited, but preferably within the range of 5 nm or more and 1,000 nm or less, and more preferably within the range of 10 nm or more and 200 nm or less.

The particle size of the filler is a primary particle size. The particle size of the filler is defined as the mean value, obtained by arbitrarily extracting 20 samples, measuring the particle sizes (longer diameters) of the extracted samples using an electron microscope, and calculating the average of the measured particle sizes.

The content of the filler is preferably within the range of 5% by mass or more and 15% by mass or less, and more preferably within the range of 6% by mass or more and 12% by mass or less, with respect to the total amount of the rust-preventive composition.

### <Hydrogenated Oil (D)>

Examples of the hardened oil include: natural drying oils such as linseed oil, perilla oil, tung oil, hempseed oil, safflower oil, oiticica oil, sardine oil and herring oil; and synthetic drying oils such as dehydrated castor oils. The hardened oil preferably has an iodine value of 100 or more. The hardened oils can be used singly, or as a mixture of two or more kinds thereof.

The content of the hardened oil is not particularly limited, but preferably within the range of 9% by mass or more and 15% by mass or less, and more preferably within the range of 9% by mass or more and 12% by mass or less, with respect to the total amount of the rust-preventive composition.

### <Diluent (E)>

The diluent is not particularly limited as long as the diluent can be used as a base oil. Examples of the diluent which can be used include mineral oil-based lubricating oils, synthetic lubricating oils, liquid saturated hydrocarbon mixtures, vegetable oil-based semi-drying oils, and vegetable oil-based non-drying oils. Specific examples of the diluent include mineral oil-based lubricating oils such as paraffin-based lubricating oils and naphthene-based lubricating oils; synthetic lubricating oils such as esters, polyalphaolefins, polyalkylene glycols, polybutenes and alkyl diphenyl ethers; liquid saturated hydrocarbon mixtures such as liquid paraffins; vegetable oil-based semi-drying oils such as soybean oil, cottonseed oil, rapeseed oil, rice oil, sesame oil, sunflower oil and corn oil; and vegetable oil-based non-drying oils such as olive oil, palm oil, peanut oil and camellia oil. The diluent can be used singly, or as a mixture of two or more kinds thereof.

The content of the diluent is not particularly limited, but preferably within the range of 33% by mass or more and 60% by mass or less, and particularly preferably within the range of 50% by mass or more and 60% by mass or less, with respect to the total amount of the rust-preventive composition.

The diluent preferably has a kinematic viscosity at 40°C within the range of 50 mm²/s or more and 100 mm²/s or less, and more preferably within the range of 50 mm²/s or more and 80 mm²/s or less. When the kinematic viscosity of the diluent is within the range described above, the rate of decrease in viscosity of the rust-preventive composition can be more easily controlled within an appropriate range, making it possible to reduce the occurrence of sagging. The kinematic viscosity of the diluent is a value measured by the measurement method specified in Clause 5 of JIS K 2283.

### <Wax (F)>

The rust-preventive composition according to one embodiment of the present invention does not substantially contain a wax. The expression "does not substantially contain" means that the content of wax is within the range of 0% by mass or more and 1% by mass or less with respect to the total amount of the rust-preventive composition. The content of wax with respect to the total amount of the rust-preventive composition is more preferably within the range of 0% by mass or more and 0.5% by mass or less, and still more preferably within the range of 0% by mass or more and 0.1% by mass or less.

The "wax" refers to a hydrocarbon or a mixture of various hydrocarbons, which is solid or semi-solid at a temperature of 35°C or lower. Examples of the wax include petroleum waxes, vegetable oil-based waxes, animal-based waxes, mineral oil-based waxes, and synthetic waxes. Examples of the petroleum wax include paraffin wax, microcrystalline wax, and petrolatum. Examples of the vegetable oil-based wax include candelilla wax, carnauba wax, rice wax, wood wax, and jojoba oil. Examples of the animal-based wax include beeswax, lanolin, and whale wax. Examples of the mineral oil-based wax include montan wax, ozocerite, and ceresin. Examples of the synthetic wax include polyethylene-based waxes and polypropylene-based waxes. The waxes may be contained singly, or as a mixture of two or more kinds thereof.

### <Other Component>

The rust-preventive composition may contain a component (also referred to as (an) "other component") other than the components (A) to (F) described above, to the extent that the effects of the present invention are not impaired.

Examples of the other component include deodorizing agents, fragrances, and colorants.

### EXAMPLES

The present invention will be described below in further detail with reference to Examples. However, the scope of the present invention is not limited by those Examples.

### <Preparation of Rust-Preventive Compositions>

The respective raw materials (% by mass) shown in Table 1 were mixed, followed by heating and stirring. Thereafter, the resulting mixture was allowed to cool naturally, to obtain the rust-preventive compositions of Examples 1 to 10 and Comparative Examples 1 to 6. The respective symbols in Table 1 indicate the following materials used for the preparation of the rust-preventive compositions. In each Example and Comparative Example, a commercially available mixture of a sulfonate and an oil was used as the rust-preventive additive, a polymerized dehydrated castor oil was used as the hardened oil, calcium carbonate (particle size: 80 nm) was used as the filler, and bentonite having a particle size of from 0.1 to 1 µm was used as the bentonite.
(E1): Mineral oil-based lubricating oil (kinematic viscosity at 40°C: 55 mm²/s)
(E2): Mineral oil-based lubricating oil (kinematic viscosity at 40°C: 75 mm²/s)
(W1): Paraffin wax
(W2): Microcrystalline wax

### <Rate of Decrease in Viscosity>

In the viscosity measurement, a rheometer, MCR102, manufactured by Anton Parr Ltd. was used to measure the viscosity at a shear rate of 2 s⁻¹, when the temperature was increased from 20°C to 80°C at a heating rate of 0.08°C/s, with PP25 plates (diameter of 25 mm) at a gap of 1 mm. Then the rate of decrease in viscosity was calculated from the difference in the viscosities at 20°C and at 80°C. Thereafter, the rate of decrease in viscosity was evaluated in accordance with the following evaluation criteria. The results are shown in Table 1. Those with a rate of decrease in viscosity of 25% or less were classified as "Pass".

**[Table 1]**

| | Rust-preventive additive | Bentonite | Hydrogenated oil | Diluent | Filler | Wax | Viscosity at 20°C | Viscosity at 80°C | Rate of decrease in viscosity |
|---|---|---|---|---|---|---|---|---|---|
| | (wt%) | (wt%) | (wt%) | (wt%) | (wt%) | (wt%) | (mPa·s) | (mPa·s) | (%) |
| Example 1 | 16 | 4 | 10 | E1(60) | 10 | - | 11637 | 10578 | 9 |
| Example 2 | 26 | 4 | 10 | E1(50) | 10 | - | 15077 | 13428 | 11 |
| Example 3 | 35 | 4 | 10 | E1(41) | 10 | - | 22203 | 17564 | 21 |
| Example 4 | 26 | 2 | 10 | E1(52) | 10 | - | 13260 | 10960 | 17 |
| Example 5 | 26 | 6 | 10 | E1(48) | 10 | - | 20172 | 16680 | 17 |
| Example 6 | 26 | 4 | 10 | E1(55) | 5 | - | 14415 | 11706 | 19 |
| Example 7 | 26 | 4 | 10 | E1(45) | 15 | - | 17328 | 14903 | 14 |
| Example 8 | 26 | 2 | 10 | E2(52) | 10 | - | 15883 | 12350 | 22 |
| Example 9 | 16 | 4 | 10 | E1(59) | 10 | W1(1) | 13666 | 10468 | 23 |
| Example 10 | 16 | 4 | 10 | E1(59) | 10 | W2(1) | 13114 | 10589 | 19 |
| Comparative Example 1 | 16 | 4 | 10 | E1(58) | 10 | W1(2) | 15357 | 9868 | 36 |
| Comparative Example 2 | 16 | 4 | 10 | E1(58) | 10 | W2(2) | 14627 | 10113 | 31 |
| Comparative Example 3 | 16 | 4 | - | E1(70) | 10 | - | 8646 | 7096 | 18 |
| Comparative Example 4 | 5 | 4 | 10 | E1(71) | 10 | - | 8357 | 7003 | 16 |
| Comparative Example 5 | 26 | - | 10 | E1(54) | 10 | - | 10632 | 7835 | 26 |
| Comparative Example 6 | 26 | 4 | 10 | E1(60) | - | - | 12229 | 8520 | 30 |

### <Evaluation of Rust-Preventive Performance>

On a cold-rolled steel plate (JIS G 3141 SPCC-SD) having a size of 70 × 150 × 0.8 mm, from which the oil component was removed with a solvent (mineral spirit), followed by drying, the rust-preventive composition of each of Examples 1 to 10 and Comparative Examples 1 to 6 was coated with a bar coater so that a coating film thickness was 50 µm. Each coated steel plate was dried at room temperature for 72 hours, and then subjected to a neutral salt spray test up to a maximum of 720 hours, to measure the time required for the occurrence of rust. Thereafter, the rust-preventive performance was evaluated in accordance with the following evaluation criteria. The results are shown in Table 2. Those evaluated as "A" or higher were classified as "Pass".
S: No occurrence of rust observed for 720 hours.
A: 480 hours or more and less than 720 hours.
B: 240 hours or more and less than 480 hours.

### <Evaluation of Coating Retention during Coating>

Electrodeposition-coated plates (manufactured by Paltec Co., Ltd.) having a size of 70 × 150 × 0.8 mm were prepared. After removing the oil component from these plates with a solvent (mineral spirit), followed by drying, the lower half part of each test piece was masked, and the rust-preventive composition of each of Examples 1 to 10 and Comparative Examples 1 to 6 was coated on the upper half part of the test piece with a bar coater. With the minimum film thickness set to 500 µm, the film thickness was increased at an increment of 100 µm, to prepare the respective coated plates having up to a maximum film thickness of 1,000 µm. Subsequently, the coated plates were left to stand at room temperature for one hour with the masking of each coated plate peeled off and in a position vertical to the ground, to confirm the film thickness at which the occurrence of sagging was observed. Thereafter, the coating retention was evaluated in accordance with the following evaluation criteria. The results are shown in Table 2. Those evaluated as "A" or higher were classified as "Pass".
S: No occurrence of sagging observed at 1,000 µm.
A: 800 µm or more and less than 1,000 µm.
B: 700 µm or more and less than 800 µm.
C: less than 700 µm.

### <Evaluation of Coating Retention during Heating>

Electrodeposition-coated plates (manufactured by Paltec Co., Ltd.) having a size of 70 × 150 × 0.8 mm were prepared. After removing the oil component from these plates with a solvent (mineral spirit), followed by drying, the lower half part of each test piece was masked, and the rust-preventive composition of each of Examples 1 to 10 and Comparative Examples 1 to 6 was coated on the upper half part of the test piece with a bar coater. With the minimum film thickness set to 500 µm, the film thickness was increased at an increment of 100 µm, to prepare the respective coated plates having up to a maximum film thickness of 900 µm. Subsequently, the coated plates were dried naturally for 4 hours in a position horizontal to the ground, then heated at 80°C for 30 minutes with the masking of each coated plate peeled off and in a position vertical to the ground, to confirm the film thickness at which the occurrence of sagging was observed. Thereafter, the coating retention was evaluated in accordance with the following evaluation criteria. The results are shown in Table 2. Those evaluated as "A" or higher were classified as "Pass".
S: No occurrence of sagging observed at 900 µm.
A: 700 µm or more and less than 900 µm.
B: 400 µm or more and less than 700 µm.
C: less than 400 µm.

### <Difference in Coating Retention between that during Coating and that during Heating>

Based on the results of the evaluation of the coating retention during coating and the evaluation of the coating retention during heating, the difference in film thickness was evaluated in accordance with the following evaluation criteria. The results are shown in Table 2. Those evaluated as "A" or higher were classified as "Pass".
S: Less than 200 µm
A: 200 µm or more and less than 300 µm
B: 300 µm or more and less than 500 µm
C: 500 µm or more

**[Table 2]**

| | Rust-preventive performance | Coating retention during coating | Coating retention during heating | Difference in film thickness between that during coating and that during heating |
|---|---|---|---|---|
| Example 1 | A | A | A | S |
| Example 2 | S | S | S | S |
| Example 3 | S | S | S | A |
| Example 4 | S | A | A | S |
| Example 5 | S | S | S | A |
| Example 6 | S | S | A | A |
| Example 7 | S | S | S | S |
| Example 8 | S | S | A | A |
| Example 9 | A | A | A | A |
| Example 10 | A | A | A | A |
| Comparative Example 1 | A | S | A | B |
| Comparative Example 2 | A | S | A | B |
| Comparative Example 3 | A | C | B | S |
| Comparative Example 4 | B | C | B | S |
| Comparative Example 5 | S | B | C | B |
| Comparative Example 6 | S | A | B | A |

## Claims

1. A rust-preventive composition comprising: a rust-preventive additive; bentonite; a filler; a hardened oil; and a diluent;
wherein the content of wax is within the range of 0% by mass or more and 1% by mass or less, the content of the rust-preventive additive is within the range of 16% by mass or more and 35% by mass or less, and the content of the bentonite is within the range of 2% by mass or more and 6% by mass or less; and
wherein the rust-preventive composition has a rate of decrease in viscosity at a temperature of from 20°C to 80°C of 25% or less.

2. The rust-preventive composition according to claim 1, having a viscosity as measured at 80°C of 10,000 mPa·s or more.

3. The rust-preventive composition according to claim 1 or 2, wherein the content of the filler is within the range of 5% by mass or more and 15% by mass or less.

4. The rust-preventive composition according to any one of claims 1 to 3,
wherein the diluent has a kinematic viscosity as measured at 40°C within the range of 50 mm²/s or more and 100 mm²/s or less.

5. An automobile component comprising a coating comprising the rust-preventive composition according to any one of claims 1 to 4.
